# EUROPEAN PATENT APPLICATION

(11) **EP 3 182 362 A1**
(43) Date of publication of application: **21.06.2017**
(21) Application number: 16162170.1
(22) Date of filing: 24.03.2016
(51) Int. Cl.: G06Q 30/06

(54) **METHOD AND SYTEM FOR EVALUATING FITNESS BETWEEN EYEGLASSES WEARER AND EYEGLASSES WORN THEREBY**

(30) Priority: 14.12.2015 CN 201510922881
(71) Applicant: Essilor International, 94220 Charenton Le Pont (FR)
(72) Inventor: XIA, Lin, SHANGHAI (CN)
(74) Representative: Cabinet Plasseraud

(57) **Abstract**

A method for evaluating fitness between an eyeglasses wearer and eyeglasses worn thereby, the method comprising the following steps:
- generating facial attribute data of the wearer;
- generating attribute data of the eyeglasses;
- establishing a wearer model based on the facial attribute data;
- establishing an eyeglasses model based on the eyeglasses attribute data;
- comparing the wearer model with the eyeglasses model, and evaluating the fitness therebetween; and
- based on a fitness evaluation result, generating rating score information indicative of the extent to which the eyeglasses increase the wearer's aesthetic value.

By way of the method, an eyeglasses wearer can conveniently learn the degree of matching between eyeglasses worn by him/her and his/her facial appearance, so as to decide whether to buy or use these eyeglasses.

## Description

### Technical field

The present invention relates to the technical field of human face identification and artificial intelligent model establishment, in particular to a method and system for evaluating fitness between eyeglasses and a person wearing them.

### Background art

As more and more eyeglasses in various styles appear on the market, people have greater room for choice, in order to obtain suitable eyeglasses. Meanwhile, as people adopt eyeglasses with different functions, the role of eyeglasses is no longer restricted to fulfilling their optical function; they can also serve the function of increasing the aesthetic value (degree of beauty). For instance, lens-free frames and sunglasses in different styles can match different face shapes and scenarios, to give the wearer a higher aesthetic value and achieve an effect similar to that achieved by matching different personal adornments.

This beauty function of eyeglasses requires people to take more factors into account when choosing eyeglasses. However, due to a lack of appropriate specialist knowledge, as well as the fact that when faced with a dazzling array of eyeglasses in various styles, an ordinary wearer who wants to select eyeglasses is unable to quickly and satisfactorily obtain and choose suitable eyeglasses to achieve the above objective.

In the prior art, there are various methods and systems which are able to select, based on the wearer's face shape, one or more pairs of eyeglasses from a list of eyeglasses, according to a certain algorithm, for recommendation to the wearer.

Although these methods and systems for recommendation do indeed make it easier for a wearer to select eyeglasses, this kind of recommendation is not intuitive. In particular, when more than one pair of glasses are recommended, the wearer still faces the problem of a difficult choice, and as before, may be unable to obtain more suitable eyeglasses.

### Content of the invention

It is worth noting that the object of the present invention is to overcome one or more defects that have already been found in the background art.

For this object, a method for evaluating fitness between an eyeglasses wearer and eyeglasses worn thereby is proposed according to the present invention, the method comprising the following steps:
- generating facial attribute data of the wearer;
- generating attribute data of the eyeglasses;
- establishing a wearer model based on the facial attribute data;
- establishing an eyeglasses model based on the eyeglasses attribute data;
- comparing the wearer model with the eyeglasses model, and evaluating the fitness therebetween; and
- based on a fitness evaluation result, generating rating score information indicative of the extent to which the eyeglasses increase the wearer's aesthetic value.

By way of the above method, when choosing eyeglasses, an eyeglasses wearer can conveniently learn the degree of matching between eyeglasses worn by him/her and his/her facial appearance, and can intuitively learn through rating score information whether his/her aesthetic value is increased or reduced by wearing these eyeglasses, so as to decide whether to buy or use these eyeglasses based on the rating score information.

In a different embodiment according to the title of the present invention, we may use one and/or more of the following configurations:
Furthermore, according to the method of the present invention, the step of generating facial attribute data comprises:
   - capturing at least one image of a wearer, wherein the image is a two-dimensional or three-dimensional image;
   - detecting a face in the image; and
   - characterizing facial attributes of the wearer, e.g. identifying and calibrating each main attribute of the face (face width, eye width, etc.).

By means of these steps, more precise facial attribute information can be obtained, to facilitate subsequent steps.

Furthermore, according to the method of the present invention, the wearer can receive information including at least one image of him/her wearing the eyeglasses along with corresponding rating score information. In addition, the information can be shared by the wearer through a social networking website. Through these steps, the wearer can obtain a more intuitive evaluation for the choice and wearing of eyeglasses, and can obtain more feedback through a social networking website, making it easier for the wearer to obtain the extent to which the eyeglasses he/she is wearing fit him/her.

Furthermore, according to the method of the present invention, the wearer can obtain a recommendation of other eyeglasses capable of bringing a higher rating score, so that the wearer can choose more suitable eyeglasses based on the rating score.

Furthermore, according to the method of the present invention, the eyeglasses or the recommended eyeglasses are linked to an online store, wherein the wearer can buy the eyeglasses in the online store. This makes it easy for the wearer to buy the eyeglasses he/she likes after learning the rating score.

Optionally, according to the method of the present invention, the step of generating eyeglasses attribute data comprises a step of acquiring attributes of an eyeglasses frame and lenses from an eyeglasses manufacturer. This facilitates specialized model establishment and enables the eyeglasses manufacturer to acquire the requirements for the wearer more directly.

Furthermore, according to the method of the present invention, the step of establishing a wearer model comprises a step of establishing wearer metadata, wherein the wearer metadata preferably comprises:
- metadata relating to wearer face shape;
- metadata relating to wearer eye shape.

In addition, the step of establishing an eyeglasses model comprises a step of establishing eyeglasses metadata, wherein the eyeglasses metadata comprises attributes of an eyeglass frame and lenses.

Of course, the wearer metadata and eyeglasses metadata may also comprise other relevant metadata, as long as these metadata can be used for subsequent comparative analysis and evaluation.

Furthermore, according to the method of the present invention, the step of comparing the wearer model with the eyeglasses model, and calculating/evaluating the fitness therebetween, comprises:
- pre-evaluating the wearer model and eyeglasses model in a kernel database;
- comparing and calculating/evaluating the wearer metadata in the kernel database;
- comparing and calculating/evaluating the eyeglasses metadata in the kernel database; and
- generating an evaluation matrix based on the above steps.

Advantageously, the kernel database at least comprises a wearer model database and an eyeglasses model database obtained through big data analysis, and when a new wearer model and/or eyeglasses model has not been recorded in the kernel database, the kernel database can be updated by adding the new wearer model and/or eyeglasses model.

Furthermore, preferably, the step of generating rating score information also comprises a step of creating weighted scores based on the evaluation matrix.

Based on the above step of calculating rating score fitness, since a kernel database and the mode of big data sample acquisition and analysis are used, the final rating score can be made more objective and reliable. Moreover, by way of the mode of learning expansion, the kernel database can perform continuous updating and perfecting with the evaluations of different wearers; this also helps to make the final rating score more rational.

In addition, the present invention also relates to a system for evaluating fitness between an eyeglasses wearer and eyeglasses worn thereby, the system comprising:
- an attribute data generating module, for generating facial attribute data of the wearer, and generating eyeglasses attribute data of the eyeglasses;
- a model establishing module, for establishing a wearer model based on the facial attribute data, and establishing an eyeglasses model based on the eyeglasses attribute data;
- an evaluation module, for comparing the wearer model with the eyeglasses model, and calculating/evaluating the fitness therebetween; and
- a rating score generating module, which gives a rating score of the extent to which the eyeglasses increase the wearer's aesthetic value, based on a fitness evaluation result.

Through this system, the wearer can conveniently learn whether the eyeglasses he/she is wearing can increase his/her aesthetic value, and by how much.

Furthermore, the system also comprises an image capture device for capturing at least one image of the wearer, the image capture device being a two-dimensional or three-dimensional camera. Of course, other image capture devices may also be used, e.g. a video camera, and a scanner is used to scan a photograph of the wearer directly. Alternatively, the wearer may also upload his/her photograph directly into the system.

Furthermore, the system also comprises a display apparatus, which displays at least one image showing the wearer wearing eyeglasses, along with a corresponding rating score. The rating score may be a value rating score, a colour rating score, or another visual graphic rating score, to enable the wearer to intuitively and conveniently learn a particular rating score result. In addition, the image and rating score may be shared through a social network.

In addition, the present invention may also relate to a method for evaluating fitness between a head-mounted device wearer and the head-mounted device worn thereby, the method comprising the following steps:
- generating facial attribute data of the wearer;
- generating attribute data of the head-mounted device;
- establishing a wearer model based on the facial attribute data;
- establishing a head-mounted device model based on the head-mounted device attribute data;
- comparing the wearer model with the head-mounted device model, and evaluating the fitness therebetween; and
- based on a fitness evaluation result, generating rating score information indicative of the extent to which the head-mounted device increases the wearer's aesthetic value.

The head-mounted device may be a head-mounted device which needs to be rated when worn, for example a helmet, headphones or a dust mask.

Finally, the present invention also relates to a computer program product, comprising a series of instructions which, when loaded into a computer, make the computer or a hardware system execute steps of a method according to the present invention.

It must be pointed out that terms such as "calculate", "compare" and "evaluate" used in the discussion herein all refer to actions and/or processing of a computer or a computing system or a similar electronic computing apparatus; that manipulate and/or transform data represented as physical, such as electronic, quantities within the computing system's registers and/or memories into other data similarly represented as physical quantities within the computing system's memories, registers or other such information storage, transmission or display devices. The processing or displaying referred to herein is not limited to a specific computer or other apparatus. Many types of universal system having a program according to the teaching herein may be used. In addition, embodiments of the present invention are described without referring to any specific program language. It can be appreciated that many types of program language may be used to execute the teaching of the present invention presented herein.

Through the above configuration, the present invention provides a method and system for evaluating fitness between an eyeglasses wearer and eyeglasses worn thereby. Through the present invention, an eyeglasses wearer can conveniently learn, by way of a rating score, the effect of eyeglasses he/she is wearing in terms of increasing his/her aesthetic value, and thus can make a decision quickly on whether to buy or wear the eyeglasses. Moreover, through sharing in a social network, the wearer can also obtain feedback and sharing of the wearing result more comprehensively, so as to better engage in social interaction. In addition, the present invention also enables a lens manufacturer to learn the wearing requirements of a wearer promptly, to carry out more personalized recommendation and production; this improves interaction with the customer, and improves the customer's user experience.

### Description of the accompanying drawings

It should be understood that in the present invention, except in the case of an obvious contradiction or incompatibility, all features, variants and/or particular embodiments may be combined in various ways.

Other features and advantages of the present invention will become obvious through perusal of the following particular embodiments below, which serve as a nonlimiting explanation, in conjunction with the accompanying drawings, in which:
- Fig. 1 shows a flow chart of the method according to the present invention;
- Fig. 2 shows a flow chart of comparison/evaluation steps in the method according to the present invention;
- Fig. 3 shows the system according to the present invention.

### Particular embodiments

The present invention is explained in detail below in conjunction with embodiments and the accompanying drawings. In these drawings, identical labels indicate identical or equivalent elements of the present invention in all the drawings.

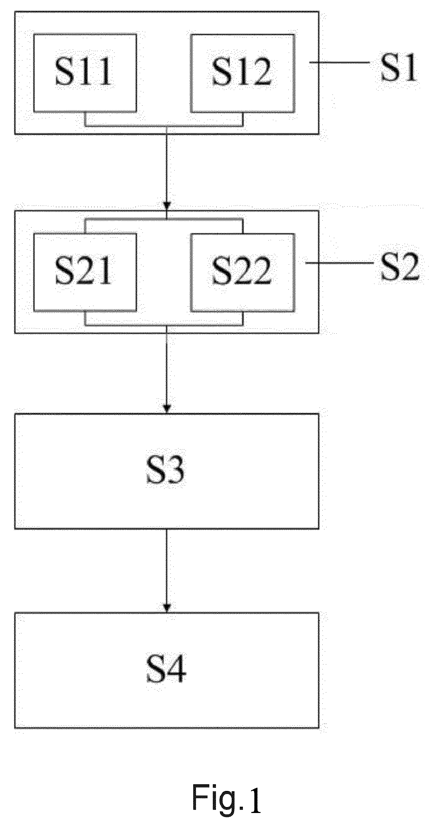

Referring to Fig. 1, this shows a flow chart of an embodiment of the method according to the present invention. Step S1 is an attribute data generating step, comprising step S11 of generating facial attribute data of a wearer and step S12 of generating eyeglasses attribute data. Step S2 is a model establishing step, comprising step S21 of establishing a wearer model and step S22 of establishing an eyeglasses model. Step S3 is a comparison/evaluation step. Step S4 is a rating score step.

Specifically, first of all in step S1, attribute data of a wearer's face (step S11) and attribute data of eyeglasses (step S12) are generated separately.

In step S11, with regard to the attribute data of the wearer's face, it is necessary for example to first of all obtain an image of the wearer's face. This image may be captured by a two-dimensional or three-dimensional camera or video camera, or may be obtained by uploading a photograph of the wearer or scanning a photograph, etc., and then identification is performed, in order to identify basic characteristics for face shape determination, eye determination and lip determination. For example, standard facial characteristics are obtained based on an open source code base familiar to those skilled in the art, such as OPENCV (open source code computer vision library). Based on analysis of key points in OPENCV, key elements such as the forehead and hair are redefined, and other key points of the head are obtained: including attributes such as face height and face width.

Similarly, in step S12, with regard to eyeglasses attribute data, for example, scanning may be performed first by means of a two-dimensional or three-dimensional scanner, then relevant attributes such as eyeglasses shape, eyeglasses size and eyeglasses colour may be obtained by way of a predetermined algorithm. Of course, these attributes may also be provided by the eyeglasses manufacturer.

Then in step S2, a wearer model is established (step S21) and an eyeglasses model is established (step S22), based on the facial attribute data and eyeglasses attribute data obtained in step S1 respectively.

Specifically, in step S21, the facial attribute data is mainly used for face shape determination and eye shape determination.

Face shape determination is mainly a determination method such as determination by a comprehensive Boych form method of learning and induction based on face shape model establishment, Chinese character standard determination, and Asian person standard determination. Data model establishment for face shape is carried out on this standard, e.g. the following twelve dimensions are set to infer basic data of face shape.

| | |
|---|---|
| 1 | Ratio of face length to face width |
| 2 | Ratio of face length to eye width |
| 3 | Height of widest part of face |
| 4 | Ratio of eye separation to face width at same face height |
| 5 | Ratio of average size of two eyes to face width at same face height |
| 6 | Ratio of face width at 20% height to face width at 80% height |
| 7 | Ratio of lip width to face width at same face height |
| 8 | Ratio of pupil separation to distance between pupils and base of nose in Y-axis direction |
| 9 | Ratio of distance between middle of left eyebrow and left pupil in Y-axis direction to face length |
| 10 | Ratio of distance between middle of right eyebrow and right pupil in Y-axis direction to face length |
| 11 | Ratio of distance between base of lip and face to face length |
| 12 | Angle of chin |

A model of basic face shape will be established by means of the characteristic values of the various dimensions above, so as to obtain a model number of the wearer such as square face - A or round face - C, and in turn establish metadata associated with face shape.

Similarly, eye shape determination mainly entails relying upon determination of eye separation and nose bridge position etc. to set up an eye model, and comprises the following dimensions:

| | |
|---|---|
| 1 | Ratio of distance between left corner of left eye and left pupil centre to left eye height |
| 2 | Ratio of distance between left corner of right eye and right pupil centre to right eye height |
| 3 | Ratio of pupil height to average height of two eyes |
| 4 | Ratio of eye separation to average height of two eyes |

A model of eye shape is established by means of the above eye shape determination based on characteristic values of various dimensions, and it is determined whether the wearer has for example slanting eyes - A, drooping eyes - B or level eyes - C etc., so as to establish metadata associated with eye shape.

In step S22, eyeglasses determination is carried out; an eyeglasses model will be set up in terms of various dimensions such as eyeglasses shape, eyeglasses size, eyeglasses colour, lens colour and thickness. Attributes of eyeglasses are categorized, and attribute information which needs to be calculated is marked with emphasis, mainly including:

| | |
|---|---|
| 1 | Eyeglasses frame shape |
| 2 | Full frame - half-frame |
| 3 | Average thickness of eyeglasses |
| 4 | Eyeglasses colour |
| 5 | Eyeglasses size |
| 6 | Eyeglasses material |
| 7 | Lens colour |
| 8 | Lens thickness |
| 9 | Eyeglasses style |

A model of eyeglasses is established by means of the above determination, and attributes of the eyeglasses are determined, so as to establish metadata associated with the eyeglasses.

Next, once the wearer model (metadata) and eyeglasses model (metadata) are obtained, comparison and evaluation of these models (metadata) are performed (step S3).

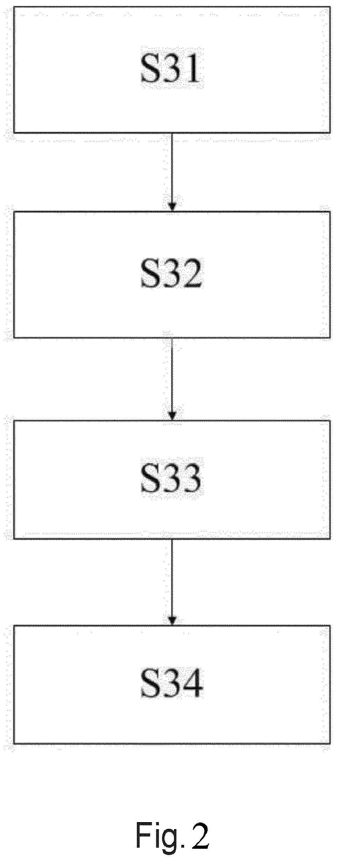

The core of step S3 is to perform accumulation by means of a series of empirical values and optimized adjustment calculation. Preferably, as Fig. 2 shows, the step comprises:
Step S31: according to a kernel database, first of all an overall sense of beauty of the wearer and the eyeglasses worn is identified in advance, and a preliminary rating score is given (e.g. an empirical rating score).
Step S32: comparison and analysis is performed of the eyeglasses model (metadata) and the split attributes of all the human face data in the kernel database (e.g. the above 12 face shape attributes and 4 eye shape attributes), it is determined which facial attribute suits the eyeglasses and which facial attribute does not suit the eyeglasses, and a corresponding score is given.
Step S33: once all eyeglasses model comparison is completed, comparison and analysis is performed of the wearer model (metadata) and the split attributes of all the eyeglasses data in the kernel database (e.g. the above 9 eyeglasses attributes), in order to determine whether each type of eyeglasses suits the wearer, and give a corresponding score;
wherein, if the wearer's face shape cannot be matched to the kernel database, e.g. face shape attributes of the wearer have not been found or identified, or a theoretical value exists but a wearer attribute has not yet been found, so that a basic face model has not been formed, then it is necessary to determine whether the kernel database needs a new addition or adjustment; then the closest basic face model (e.g. only taking into account face shape attributes) is first of all selected from the kernel database, and a recommended score is given. At the same time, an abnormal processing procedure is added, to re-establish a model for this face type.

Step S34: the data of steps S32 and S33 are integrated; eyeglasses attributes and human face attributes can be combined, calculating a weighted value of a particular attribute of eyeglasses and a specific face model, and generating an evaluation matrix; for example, the matrix may be two-dimensional, with the longitudinal direction thereof corresponding to human face attributes, and the transverse direction corresponding to eyeglasses attributes, but may also have a higher number of dimensions, in order to obtain a more precise and refined evaluation result.

The kernel database may be obtained based on experience, or may be derived based on theory.

In the case where the kernel database is obtained based on experience, the following situation exists for example: a round face generally matches angular eyeglasses, and must avoid round eyeglasses; an oval face generally matches most eyeglasses, but excessively large eyeglasses must be avoided; a heart-shaped face generally matches square eyeglasses; a square face generally matches oval and round eyeglasses, and must avoid square eyeglasses; a pear-shaped face generally matches half-frame eyeglasses, and must avoid excessively narrow eyeglasses, etc. By way of these empirical matching situations, a kernel database is established through an ordinary computer database model.

In the case where the kernel database is derived based on theory, for example, a model which really exists can be searched for and matched by means of sample pictures, e.g. multiple (e.g. 50 to 100) real face models can be established, in order to be basically able to encompass all Asian or European face types. Then, according to the model attributes (model dimensions) mentioned above, comparison of different combinations of different face shape attributes and eyeglasses attributes is established, e.g. by means of similar steps S32 and S33 in the comparison and evaluation step S3, comparison and establishment of basic data is carried out, in order to obtain a kernel database. The kernel database may be in the form of an array or in another number set form.

In addition, step S3 may also comprise a step of acquiring and referring to another personalized attribute of the wearer; this personalized attribute may comprise: the wearer's age, the wearer's profession, the wearer's gender, the wearer's faith, etc. Through comparison of these additional dimension attributes, more precise and refined evaluation is performed, to obtain a more complete evaluation matrix.

Finally, based on a fitness result obtained by the evaluation of step S3, step S4 generates rating score information. The rating score information indicates the extent to which the eyeglasses increase the aesthetic value of the wearer, and for example can be obtained directly from the above evaluation matrix, or be obtained by a weighted score algorithm based on the matrix. The rating score information may include an image of the wearer wearing his/her chosen eyeglasses, also marked with a corresponding score, to indicate the extent to which the eyeglasses increase the wearer's aesthetic value. For example, this is increased by 10 points, or decreased by 10 points (with a total of 100 points). Of course, another visual figure or colour may also be displayed. For example, a smiling face or a green colour represents an increase in aesthetic value, whereas a crying face or a yellow colour represents a decrease in aesthetic value.

After the rating score information and corresponding image, sharing may also be conducted by means of the internet, in particular a social network, to facilitate broader social interaction, to obtain more ratings, so as to help the wearer to learn the aesthetic effect of wearing eyeglasses more intuitively, and also help to make a decision as to whether to buy or wear them.

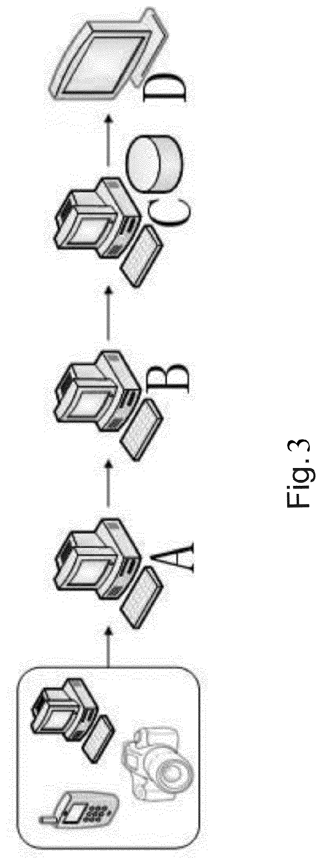

Fig. 3 shows a system for evaluating fitness between an eyeglasses wearer and eyeglasses worn thereby according to the present invention, the system comprising:
- an attribute data generating module A, for generating facial attribute data of the wearer, and generating eyeglasses attribute data of the eyeglasses;
- a model establishing module B, for establishing a wearer model based on the facial attribute data, and establishing an eyeglasses model based on the eyeglasses attribute data;
- an evaluation module C, for comparing the wearer model with the eyeglasses model, and calculating/evaluating the fitness therebetween; and
- a rating score generating module D, which gives a rating score of the extent to which the eyeglasses increase the wearer's aesthetic value.

The wearer uploads a photograph of his/her face to the attribute data generating module A via a webpage or an APP, or takes a front photograph of him/herself directly using a digital camera, computer or mobile phone camera and uploads this front photograph. The module A will obtain main facial attribute data points by means of detection points. At the same time, data patching and improvement may also be performed by means of various automated comparison tools such as big data empirical value adjustment and solutions such as expert assessment. Facial attribute data of the wearer is finally obtained.

In addition, the wearer scans the actual eyeglasses selected, or directly selects electronic eyeglasses displayed in a computer, and transmits relevant data to module A. Module A generates eyeglasses attribute data by means of a predetermined algorithm.

The generated facial attribute data and eye attribute data are sent to the model establishing module B. Based on facial attribute data (e.g. a human face identification figure), module B establishes metadata of a human face identification model, e.g. face shape - square face, chin - pointed chin, eye separation - moderate, etc. At the same time, module B sets up a model for the eyeglasses selected by the user based on eyeglasses attribute data, to obtain eyeglasses metadata types, e.g. eyeglasses type - trapezoidal, style - half-frame, size - small, colour - light, etc.

In module C, by way of the above model establishment determination, the metadata position of the eyeglasses and the wearer's face shape in the kernel database thereof is inferred, wherein the kernel database is set in advance by the method described above. Subsequently, evaluation module C establishes metadata basic data comparison according to steps (S31 - S34) described above; there will be a corresponding degree of matching between metadata of the human face and eye models. Scores and weightings of all matching data are obtained from the kernel database, by means of empirical value data for example, to generate an evaluation matrix. The evaluation module C repeats the comparison operation, matches the comparison relationships of all metadata, and obtains a final aesthetic value rating score.

Finally, the rating score generating module D informs a user of the value in a visual form. The module may be a mobile phone terminal, a computer terminal, or another terminal having a display device.

In addition, the present invention also comprises computer executable programs, which are used for executing the above method and run in the above system. These programs are written in an ordinary computer language, to facilitate execution and updates.

The above embodiments merely serve as real examples, without defining the scope of the present invention. Those skilled in the art could, on this basis, anticipate other embodiments capable of realizing the same functions within the scope of protection of the claims of the present invention. For example, the method according to the present invention could also recommend to a wearer eyeglasses with higher aesthetic value rating score obtained in step S3 according to a rating score result. At the same time, the wearer can also be informed of star personalities with a similar face shape model, and shown photographs of them wearing the same style of eyeglasses. As another example, information about the eyeglasses or the recommended eyeglasses is linked to an online store in which the wearer can buy the eyeglasses directly. In addition, the method according to the present invention be used not only for eyeglasses but also for other head-mounted devices, e.g. a head-mounted device which needs to be rated when worn, for example a helmet, headphones or a dust mask. In addition, with the development of technology, the range of functions and types of eyeglasses is expanding steadily, e.g. electronic eyeglasses and 3D eyeglasses, etc., thus the eyeglasses referred to in the present invention are not restricted to eyeglasses in the traditional sense, but also include a range of eyeglasses in a broader sense.

Those skilled in the art will grasp various embodiments, variants and improvements. In particular, it must be clarified that except in the case of an obvious contradiction or incompatibility, the above features, variants and/or particular embodiments of the present invention may be combined. All these embodiments, variants and improvements fall within the scope of protection of the present invention.

## Claims

1. A method for evaluating fitness between a wearer and eyeglasses selected to be fitted by the wearer, the method comprising steps of :
- generating facial attribute data associated with the wearer;
- generating attribute data of the eyeglasses;
- establishing wearer model based on the facial attribute data;
- establishing eyeglass model based on the eyeglass attribute data;
- comparing the wearer model and the eyeglass model and evaluating the fitness therebetween; and
- generating a rating score information indicative of the extent to which the eyeglasses increases the wearer's aesthetic value based on the fitness evaluation result.

2. The method of claim 1, wherein the step of generating the facial attribute data comprises steps of:
- capturing at least one image of the wearer, wherein the image is a two-dimensional or three-dimensional image;
- detecting a face in the image; and
- characterizing facial attributes of the wearer.

3. The method of claims 1 or 2, wherein the wearer receives information including at least one image of him fitted with the eyeglasses along with the corresponding rating score information.

4. The method of claim 3, wherein said information can be shared via social network.

5. The method of claim 3, wherein the wearer receives a recommendation of other eyeglasses which would bring higher rating score.

6. The method of claim 5, wherein the information about the selected eyeglasses or the recommended glasses is linked to an on-line store where the wearer can purchase the eyeglasses.

7. The method of claims 1 or 2, wherein the step of establishing wearer model comprises a step of establishing metadata of the wearer, the metadata of the wearer preferably comprising:
- metadata on face shape of the wearer;
- metadata on eye shape of the wearer.

8. The method of claim 7, wherein the step of establishing eyeglass model comprises a step of establishing metadata of the eyeglass which includes the atributes of the eyeglass frame and lens.

9. The method of claim 8, wherein the step of comparing the wearer model and the eyeglass model and evaluating fitness therebetween comprises steps of:
- pre-evaluating the wearer model and the eyeglass model in a kernel database;
- comparing and evaluating the metadata of the wearer in the kernel database;
- comparing and evaluating the metadata of the eyeglass in the kernel database; and
- generating an evaluation matrix on the basis of the above steps.

10. The method of claim 9, wherein the kernel database at least comprises a database of wearer models and a database of eyeglass models which are obtained by big data analysis and is adapted to be updated by adding new wearer models and/or eyeglass models when they are not included in the kernel database.

11. The method of claim 9, wherein the step of creating a rating score further comprises a step of creating weighted scores on the basis of the evaluation matrix.

12. A system for evaluating fitness between a wearer and eyeglasses selected to be fitted by the wearer, the system comprising:
- an attribute data generating module for generating facial attribute data associated with the wearer and eyeglass attribute data;
- a model establishing module for establishing wearer model based on the facial attribute data and eyeglass model based on the eyeglass attribute data;
- an evaluating module for comparing the wearer model and the eyeglass model and evaluating fitness therebetween; and
- a rating score generating module for generating and indicating a rating score of the extent to which the selected eyeglasses increase the wearer's aesthetic value on the basis of the fitness evaluation result.

13. The system of claim 12, wherein the system further comprises an image capture device for capturing at least one image of the wearer, and the system further comprises a displaying device for displaying at least one image showing how the wearer would appear wearing the eyeglass along with the corresponding rating score.

14. A system for evaluating fitness between a wearer and an eyeglass frame intended to be fitted by the wearer, the system comprising:
- a processor for executing computer-executable instructions;
- a computer readable storage media having stored thereon computer-executable instructions for :
- generating facial attribute data associated with the wearer;
- generating eyeglass attribute data;
- establishing wearer model based on the facial attribute data;
- establishing eyeglass model based on the eyeglass attribute data;
- comparing the wearer model and the eyeglass model and evaluating fitness therebetween; and
- generating a rating score of the extent to which the selected eyeglasses increase the wearer's aesthetic value based on the fitness evaluation result.

15. A method for evaluating fitness between a wearer and a head-mounted device selected to be fitted by the wearer, the method comprising steps of :
- generating facial attribute data associated with the wearer;
- generating attribute data of the head-mounted device;
- establishing wearer model based on the facial attribute data;
- establishing head-mounted device model based on the head-mounted device attribute data;
- comparing the wearer model and the head-mounted device model and evaluating the fitness therebetween; and
- generating a rating score information indicative of the extent to which the head-mounted device increases the wearer's aesthetic valuebased on the fitness evaluation result.
